# EUROPEAN PATENT SPECIFICATION

(11) **EP 3 347 749 B1**
(45) Date of publication and mention of the grant of the patent: **07.06.2023**
(21) Application number: 15771045.0
(22) Date of filing: 07.09.2015
(51) Int. Cl.: G02B 5/20, C03C 17/36, G02B 1/11

(54) **MULTILAYERED OPTICAL SYSTEM AND METHOD FOR PRODUCING THE SAME**
OPTISCHES MEHRSCHICHTSYSTEM UND DESSEN HERSTELLUNGSVERFAHREN
SYSTÈME MULTICOUCHE OPTIQUE ET SON PROCÉDÉ DE FABRIQUATION

(43) Date of publication of application: 18.07.2018
(73) Proprietor: Fraunhofer-Gesellschaft zur Förderung der angewandten Forschung e.V., 80686 München (DE); King Abdulaziz City for Science and Technology, Riyadh 11442 (SA)
(72) Inventor: ABENDROTH, Thomas, 01217 Dresden (DE); ALTHUES, Holger, 01309 Dresden (DE); SCHUMM, Benjamin, 01307 Dresden (DE); KASKEL, Stefan, 01159 Dresden (DE); ALAJLAN, Saleh, Abdulrahman, Riyadh 11442 (SA); ALMOGBEL, Ahmed, M., Riyadh 11442 (SA); ALRAJHI, Talal, Riyadh 11442 (SA); ALMALEKI, Ahmed, Riyadh 11442 (SA)
(74) Representative: Pfenning, Meinig & Partner mbB
(86) International application number: PCT/EP2015/070380
(87) International publication number: WO 2017/041819

(56) References cited:
- JP-A- H04 133 004
- US-A1- 2006 141 265
- US-A1- 2007 243 391
- US-A1- 2009 115 922

## Description

The present invention relates to a multilayered system. Furthermore, the present invention relates to a method for producing a multilayered system.

Solar radiation impinging glass fronts of glazings is mainly responsible for heating up buildings, interiors of cars, trains, or boats. In particular in regions showing a hot climate and a correspondingly intense ratio of solar radiation, interiors of buildings need to be air-conditioned, thereby causing high energy-consumption.

Mainly responsibly for this heating effect is electromagnetic radiation in the infrared range, i. e. radiation with a wavelength above 780 nm. Attempts have already been made to provide glazings selectively reflecting certain wavelengths of the electromagnetic spectrum. While typically infrared radiation and ultraviolet radiation (having a wavelength below 380 nm) is reflected or absorbed by such glazings, electromagnetic radiation in the visible range, i. e. with wavelengths between 380 nm and 780 nm, is transmitted through such glazings. Apart from any undesired heating effects, ultraviolet radiation is harmful to human skins, leads to bleaching of furniture, pictures, or books, and may even change a composition of plastic articles.

Several approaches exist to tackle the task of providing glazings with desired properties: metal-based coatings show a high reflectivity in the infrared range but also a reduced transmittance in the visible range; coatings of metal-oxides are typically not suitable for ultraviolet absorption and may comprise expensive materials; nanoparticles are advantageous for reflecting infrared radiation but tend to scatter incoming light making them disadvantageous for highly transparent windows; finally, infrared absorbing materials may be used but show a significant emission of thermal radiation. Multilayered systems comprising UV blocking and infrared blocking layers, as known in the art, are described in the patent publications of US-A1-2009/115922, JP-A-H04133004 and US-A1-2007/243391.

The present invention is therefore based on the object of providing a system that avoids the stated disadvantages, that is to say which is capable of efficiently blocking infrared radiation and absorbing ultraviolet radiation while at the same time transmitting visible radiation as well as a method for producing such a system.

This object is achieved according to the invention by a multilayered system as claimed in claim 1 and a method as claimed in claim 8.

Advantageous developments and embodiments are described in the dependent claims.

A multilayered system comprises a substrate, a first coating layer, and a second coating layer. The substrate is transparent for at least one wavelength in the range of visible wavelengths of electromagnetic radiation. The first coating layer for blocking radiation in the ultraviolet wavelength range of electromagnetic radiation comprises at least zinc oxide (ZnO) while the second coating layer for blocking radiation in the infrared wavelength range of electromagnetic radiation comprises at least one of a transparent conductive oxide (TCO) which is transparent in the range of visible wavelengths of electromagnetic radiation.

Such a multilayered system makes up a kind of an optical bandpass filter.

While zinc oxide shows an absorption spectrum with a sharp edge in the ultraviolet region at around 380 nm, a transparent conductive oxide efficiently reflects and/or absorbs infrared radiation. In consequence, only visible light is allowed to pass through this system, in particular since the substrate is transparent for at least one wavelength in this range, i. e. the substrate may be coloured or completely transparent. A transparent substrate or layer is to be understood as a substrate or layer with a transmittance above 10 percent for at least one wavelength in the range of visible wavelengths of electromagnetic radiation. Light scattering is suppressed and a homogeneous coating which can be easily manufactured further is achieved. The described system shows a comparatively simple layer structure which is thermally and mechanically stable as well as compact (complete thickness typically below 1 µm). Consequently, the multilayered system can be used as a window glazing, a house glazing, for sun glasses, or protective glasses in general.

In this application, a visible wavelength range of electromagnetic radiation is meant to cover the wavelengths between 380 nm and 780 nm, while the infrared wavelengths are defined as wavelengths between 780 nm and 2.5 µm. The ultraviolet wavelength range is meant to cover wavelengths of electromagnetic radiation between 200 nm and 380 nm. A conductive oxide is to be understood as a metal oxide being electrically conductive, i. e. showing a conductivity of more than 10⁴ S/m. Blocking a certain type of radiation is to be understood as reflecting part of this radiation as well as absorbing another part.

Typically, the transparent conductive oxide comprises tin oxide with oxygen vacancies and/or doped with antimony (ATO) and/or mixed antimony tin oxides. Such a doped metal oxide shows a preferred reflectivity in the infrared range. Preferably, an antimony concentration is between 0.5 atomic percent and 15 atomic percent, preferably between 1.5 atomic percent and 10 atomic percent. An enhanced concentration of antimony can as well be used to colour the system as desired, i. e. to tune the colour since antimony doping results in a bluish colour of the respective layer.

The transparent conductive oxide may as well comprise indium tin oxide (ITO), fluorine doped tin oxide (FTO), zinc tin oxide, indium gallium zinc oxide, aluminium zinc oxide (AZO), or niobium or tantalum doped titanium oxide (TiO₂).

These materials show the desired spectra for reflecting infrared radiation.

The second coating layer can be arranged between the substrate and the first coating layer not according to the invention. According to the invention, the first coating layer is arranged between the substrate and the second coating layer. Transparent conductive oxides often are chemically more stable than layers comprising zinc oxide so that this configuration shows an enhanced stability. In particular, antimony doped tin oxide shows a high chemical resistance as well.

It is advantageous that sunlight impinging on the multilayered system passes the substrate as well as the coating layers in order to allow only visible light to be transmitted more or less completely but the order of layers may be chosen depending on specific prerequisites. According to the invention, the substrate is in direct, i. e. immediately touching contact with the first coating. Correspondingly, the coating layers itself can be in direct contact with each other.

Furthermore, not according to the invention, the first coating layer and the second coating layer may be arranged on different sides of the substrate. Typically, the second coating layer is applied on the side of the substrate facing away from an interior of the unit which is equipped with the described multilayered system (preferably a room). Consequently, the first coating layer is arranged on the side of the substrate facing the interior.

In case that the first coating layer is arranged between the second coating layer and the substrate, an intermediate layer comprising tin oxide (SnO₂) is arranged between the first layer and the second layer according to the invention. This intermediate layer may act as an adhesion promoter.

Additionally an antireflective layer, preferably comprising silicon dioxide (SiO₂), magnesium fluoride (MgF₂), or a multilayer system with at least two layers like silicon dioxide/titanium dioxide (SiO₂/TiO₂), silicon dioxide/zirconium dioxide (SiO₂/ZrO₂), silicon dioxide/antimony doped tin oxide (SiO₂/ATO) or silicon dioxide/tin oxide (SiO₂/ZnO), is arranged on top of the second coating layer. Typically, this antireflective layer is arranged on the coating layer showing the biggest distance to the substrate. With such an antireflective layer, reflection losses are reduced and the transmittance of visible light increased correspondingly.

Furthermore, a diffusion barrier layer, preferably made of silicon dioxide (SiO₂), may be arranged on at least the first coating layer or the second coating layer not according to the invention.

At least one additional first coating layer and/or one additional second coating layer can be arranged on a top layer which is arranged with maximum distance to the substrate in an example not according to the invention.

The first coating layer and the second coating can be applied repeatedly on the substrate, thus, i. e. structures with the substrate followed for example by the first coating layer and the second coating layer and subsequently another first coating layer and/or another second coating layer may be applied as well. Such a setup increases a variability of the system, in particular since the order of the layers in such a layer system is arbitrary as long as layers of different materials are arranged on each other. In case such a multitude of first coating layers and second coating layers is applied, the respective coating layers may all have a same thickness or at least some of them may have different thicknesses.

The first coating layer may have a transmittance in the ultraviolet wavelength range of less than 20 percent of the incoming electromagnetic radiation in this wavelength range. Preferably, this transmittance is less than 1 percent. This can typically be achieved by increasing the thickness of the first coating layer until the desired percentage has been reached.

A thickness of the first coating layer, respectively, may be at least 50 nm, preferably at least 250 nm, more preferably at least 500 nm. While layers with a thickness of 65 nm show the desired characteristics, the effect is enhanced the thicker the layer gets. An optimum can be achieved if the layer thickness is at least 250 nm.

The second coating layer can have a thickness between 50 nm and 1000 nm, preferably between 250 nm and 500 nm, in order to achieve the targeted blocking effect.

Typically, the substrate is made of glass and preferably free from any additional colour components, i. e. conventionally transparent, so that a typical window substrate is given.

A method for producing a multilayered system comprises the steps of coating a substrate which is transparent for at least one wavelength in the range of visible wavelengths of electromagnetic radiation with a first coating layer and a second coating layer. The first coating layer is intended to block radiation in the ultraviolet wavelength range of electromagnetic radiation. This first coating layer comprises at least zinc oxide. The second coating layer is intended to block radiation in the infrared wavelength range of electromagnetic radiation and comprises at least one of a transparent conductive oxide which is transparent in the range of visible wavelengths of electromagnetic radiation. This method allows for producing compact layers nearly without any visible scattering effects.

In an example not according to the invention, the second coating layer is applied directly on the substrate while the first coating layer is applied on the second coating layer. According to the invention, the first coating layer is directly applied to the substrate and the second coating layer on the first coating layer.

Furthermore, an intermediate layer comprising tin oxide is applied on the first coating layer in case that the first coating layer is arranged directly on the substrate. The second coating layer is applied on the intermediate layer which acts as a barrier layer and an adhesion promoter as well as a protection layer for etching solution in case of a dip coating.

At least the first coating layer or the second coating layer may be applied by chemical vapour deposition or chemical solution deposition. Suitable deposition techniques include, thus, dip coating as well as solution nebulization coating. In particular, aerosol assisted chemical vapour deposition can be employed. In this process, the substrate is heated up to 400 °C to 600 °C, and coated with a precursor comprising a chemical element or a chemical component of the respective layer as well as deionized water and additives. The heating might be achieved by an electric oven, a tin bath as used in a float gas process or float-line, respectively, and/or an electrically or by infrared radiation heated heating plate (which is typically made of ceramics or graphite). Preferably, the precursor comprises zinc acetate dihydrate. This allows for a fast coating of the substrate. The discussed processes can be employed to a hot surface of a glass panel, which has been removed from a glass melt (so called float glass), so that the substrate does not yet need to be present as a solid body.

Typically, the method is carried out under atmospheric pressure, i. e. a pressure between 95000 Pa and 105000 Pa so that no vacuum is needed. It is possible as well, to carry out the method at low pressure, i. e. at pressure values below atmospheric pressure.

Additionally or alternatively, at least the first coating layer or the second coating layer is applied by physical vapour deposition, preferably by sputtering, so that a stable coating layer is achieved. Physical vapor deposition is advantageous in that etching can be avoided and, thus, a variety of layer compositions is increased.

It is as well possible to carry out a thermal post treatment of the substrate, the first coating layer and the second coating layer or any combination of first coating layers and second coating layers. Such a thermal treatment aims at reducing tensions within each of the layers as well as improving electrical and/or optical characteristics. Such a thermal post-treatment can be carried out by heating the multilayered system in an oven, heating the system by a flashlight and/or a laser beam. Typically, the temperature used for the thermal post-treatment is higher than the temperature used for applying the first coating layer and/or the second coating layer. Preferably, the temperature is at least 50 °C higher, more preferably, at least 100 °C higher.

With this method, a multilayered system with the features already described can be produced.

Exemplary embodiments of the invention are illustrated in the drawings and will be explained below with reference to figures 1 to 3 and 5 to 6. An exemplary embodiment not according to the invention is illustrated in figure 4.

In the figures:
- Fig. 1: shows a side view of a multilayered system made up of a substrate and two coating layers;
- Fig. 2: shows a further embodiment of the multilayered system with an intermediate layer in a view corresponding to figure 1;
- Fig. 3: shows a transmission spectrum of a typical multilayered system according to the invention;

- Fig. 4: shows a further embodiment of the multilayered system not according to the invention in a view corresponding to figure 1, wherein the position of the coating layers has been reversed in respect of figure 1;
- Fig. 5: shows the multilayered system of figure 2 with a further antireflective layer on top and
- Fig. 6: shows a side view of the multilayered system with several, alternating first coating layers and second coating layers in a view corresponding to figure 1.

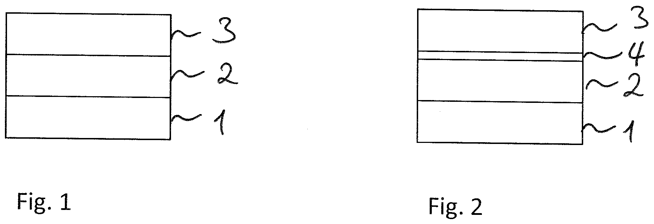

Figure 1 shows a side view of a multilayered system having a substrate 1, a first coating layer 2, and a second coating layer 3. The substrate 1 is made of uncoloured glass but coloured glass in any colour may be used in further embodiments as well. The substrate 1 is transparent for visible light, i. e. electromagnetic radiation in the wavelength range between 380 nm and 780 nm will be transmitted through the substrate 1. The substrate typically shows a thickness between 20 µm and 2 cm.

The first coating layer 2 is in direct mechanical contact with the substrate 1 and absorbs incoming radiation in the ultraviolet wavelength range. In the shown embodiment, this first coating layer 2 is made of zinc oxide and has a thickness of 500 nm. Zinc oxide shows a sharp edge in its absorption spectrum in the ultraviolet wavelength range so that ultraviolet radiation is nearly completely absorbed while visible light passes through this layer. For example, a first coating layer 2 made of 350 nm zinc oxide blocks nearly 99 percent of impinging ultraviolet radiation. The first coating layer 2 is in direct contact with the substrate 1 and the second coating layer 3 and a common surface to said layer 3 and the substrate 1, respectively, is present.

The second coating layer 3 is in direct mechanical contact with the first coating layer 2 and forms an outer layer of the multilayered system in an exemplary device not according to the invention. The second coating layer 3 has a thickness of 500 nm as well but may have a greater or smaller thickness than the first coating layer 2 in further embodiments. This second coating layer 3 is made of tin oxide doped with antimony, which is known as ATO as well. Due to its material composition, the second coating layer 3 allows visible light to transmit through this layer while radiation in the infrared wavelength range is blocked. As an example, a 500 nm thick second coating layer of antimony doped tin oxide reflects 79.2 percent of infrared radiation.

In further embodiments, the second coating layer 3 may comprise tin oxide doped with antimony and/or oxygen vacancies or any other transparent conductive oxide like indium tin oxide, fluorine doped tin oxide, zinc tin oxide, indium gallium zinc oxide, aluminium zinc oxide or niobium or tantalum doped titanium oxide.

The combination of layers as presented in the embodiment shown in figure 1 allows desired radiation in the visible wavelength range to pass through while undesired radiation in the infrared or ultraviolet range is blocked. This is advantageously achieved by combining layers of different materials. In further embodiments the optical properties, i. e. reflectivity, transmittance and absorbance, can be tuned by varying the doping concentration (which, in the embodiment shown, is 10 atomic percent, or the layer thickness. The desired effect can already be achieved by layers with a thickness of 50 nm, but the efficiency is significantly increased starting from a layer thickness of at least 180 nm.

Figure 2 shows in a view corresponding to figure 1 a further embodiment of the multilayered systemwith an intermediate layer 4 according to the invention. Recurring features are provided in this figure and in the following figures in each case with identical reference signs. The intermediate layer 4 is arranged between the first coating layer 2 and the second coating layer 3 and comprises tin oxide.

The system as shown in Figures 1 and 2 can be produced by dip coating processes. In particular, the substrate 1 is dip coated with the first coating layer 2. Since zinc oxide shows only a weak resistance to acids, a direct dip coating of antimony doped tin oxide causes issues. Antimony doped tin oxide, however, is chemically more stable so that the second coating layer 3 may act as a protection layer for the first coating layer 2. To allow applying antimony doped tin oxide by dip coating, the intermediate layer 4 is applied first by atmospheric pressure chemical vapour deposition (AP-CVD) so that subsequently the second coating layer 3 can be applied by dip coating.

As an alternative to dip coating, spray coating or sputtering may be used as well. It is further possible to use combinations of different coating techniques, i. e. applying one of the layers with a first coating technique and applying an additional layer with a different coating technique.

The system comprising the first coating layer 2 and the second coating layer 3 may be applied several times on top of each other. Furthermore, it is possible, to have a system with more than one first coating layer 2 or more than one second coating layer 3. In one embodiment, a first coating layer 2 of zinc oxide with a thickness of 50 nm is arranged on the substrate and subsequently a second coating layer 3 with a thickness of 450 nm is arranged on top of this first coating layer 3. Another coating layer 3 made of zinc oxide with a thickness of 200 nm is arranged on top of the second coating layer 3 in order to improve the absorbance in the ultraviolet range. If more than one zinc oxide layer or more than one layer made of antimony tin oxide is used, layers made of the same material may have the same thickness or different thicknesses, each.

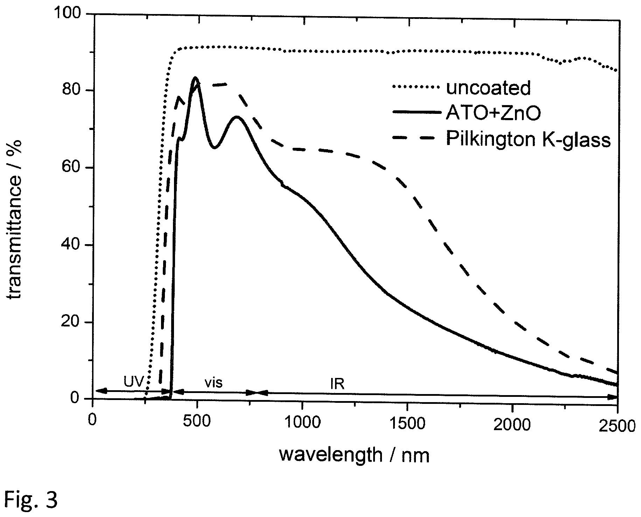

A corresponding transmission spectrum of the system shown in Figure 1 is depicted in figure 3. On the ordinate, the transmittance in percent is given while on the abscissa the wavelength in nm is shown. As can be seen uncoated glass shows nearly no transmittance in the ultraviolet range but all other wavelengths of electromagnetic radiation are transmitted without any significant losses.

In comparison to such uncoated glass or even Pilkington K-glass, the substrate 1 coated with the coating layers 2 and 3 a described above shows a sharp edge in the ultraviolet wavelength range as well as significantly reduced transmittance in the infrared range. In particular, while Pilkington K-glass shows 79.7 percent transmission in the visible range as well as 85.1 percent blocking of ultraviolet radiation and 58.3 percent of infrared reflection, the composition of layers as shown in figure 1 blocks 99.8 percent of incoming ultraviolet radiation, reflects 74 percent of impinging infrared radiation, and transmits 70.7 percent of the incoming visible light.

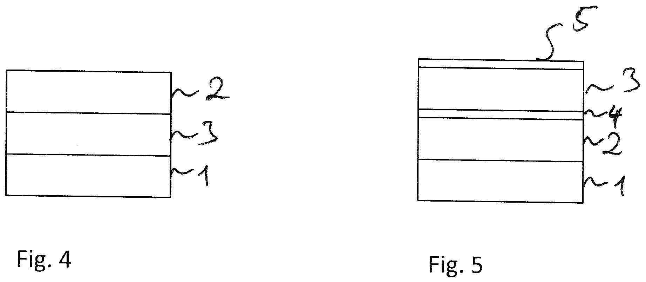

In figure 4, a further embodiment not according to the invention is shown in which the second coating layer 3 made of antimony doped tin oxide is arranged between the substrate 1 and the first coating layer 2 made of zinc oxide. In this case, the first coating layer 2 is the outer layer of the multilayered system.

Such a system can be achieved by dip coating the substrate 1 in a solution of tin(II)-chloride, antimony(III)-chloride, diacetone alcohol and ethanol. The substrate 1 is dipped in this solution and then pulled out of the solution with a predefined velocity. An optimized doping concentration for the solution is Sb:Sn=10 atomic percent.

The solution is produced in this embodiment by solving 3,792 g SnCl₂ (20 mmol) in 50 ml ethanol and subsequently adding 4 ml of 0,5 M ethanolic SbCl₃-solution (2 mmol) as well as 4,646 g diacetone alcohol (100 mmol). By cooking the solution for 30 minutes followed by reflux and cooling down to room temperature, i. e. between 18 °C and 23 °C, typically 20 °C, a muddy mixture is achieved which transforms through stirring to a clear, yellow-coloured solution. By repetitive dipping and subsequent annealing (15 minutes at 600 °C), compact layers can be achieved, wherein approximately 25 nm of layer thickness are achieved by each repetition.

Zinc oxide layers may be achieved by a similar process: dipping with pulling out at a speed of 1 mm/s, annealing at 500 °C for 10 minutes. The corresponding solution is made by mixing 100 ml 2-methoxyethanol, 4,581 g monoethanolamine, addition of 16,463 g zinc acetate dihydrate, stirring for 30 minutes at 60 °C and stirring for 2 days at room temperature, thus resulting in a clear, yellow-coloured solution. Alternative zinc sources include zinc chloride, zinc stereate, zinc nitrate, zinc acetylacetonate, zinc citratezinc oleate, zinc 2-ethylhexanoate, or organic or inorganic zinc salts.

Figure 5 shows an embodiment similar to the embodiment depicted in figure 2. In addition, an antireflective layer 5 of silicon dioxide has been applied on top of the second coating layer 3 with a thickness of 100 nm. This antireflective layer 5 suppresses interference effects so that a higher ratio of incoming light is transmitted. However, the thickness of the antireflective layer 5 depends on the thickness of a subjacent layer and typically varies between 50 nm and 150 nm. For example, when the first coating layer 2 is made of zinc oxide and applied directly on the substrate with a thickness of 250 nm and the second coating layer has a thickness of 500 nm, the thickness of the antireflective layer is preferably 94 nm. In further embodiments, magnesium fluoride might be used as a material for this antireflective layer 5 as well. Furthermore, a combination of silicon dioxide with titanium dioxide, zirconium dioxide, antimony doped tin oxide, or tin oxide might be used as a two-layer-system acting a the antireflective layer 5. In any case, the thickness of the antireflective layer 5 or of the layers making up said antireflective layer 5 needs to be adjusted to meet the criteria for suppressing reflection.

It is as well possible to apply the first coating layer 2, the second coating layer 3, the intermediate layer 4, or the antireflective layer 5 by aerosol assisted chemical vapour deposition. The substrate 1 is heated to 450 °C and subsequently coated with a precursor comprising the chemical components of the respective layer (e. g. zinc, oxygen, antimony, tin) as well as deionized water. In the described embodiment for aerosol assisted chemical vapour deposition, the first coating layer 2 of zinc oxide has been produced by adding 40 g zinc acetatedihydrate to 200 ml water. The second coating layer 3 with a 2.5 doping percentage has been produced by adding 26.05 g SnCl₄ (which means 0.1 mol) and 2.28 g SbCl₃ (corresponding to 0.01 mol) to 270 ml ethanol. Preferably, the precursor comprises zinc acetate dehydrate in order to enable the formation of a zinc oxide layer. An ultrasonic nozzle is used for nebulizing the thus created fluid which is subsequently directed via a nitrogen gas stream towards a surface of the substrate. The higher the ultrasonic frequency, the smaller are sizes of the formed droplets. Smaller droplets result in an enhanced heat transfer and more homogeneous layers. In the present embodiment, ultrasonic with a frequency between 25 kHz and 45 kHz has been used which lead to droplet sizes between 17 µm and 26 µm for ethanol as well as 27 µm and 38 µm for water. This process may be applied in float glass lines where the respective chemical elements or chemical compositions can be applied directly to a hot surface of a glass panel, which has been removed from a glass melt.

In a final step, a thermal post-treatment might be carried out in which the substrate 1 with the layers 2 and 3 is again heated up in an oven, for example. In further embodiments, the heating might be applied by a flashlight or a laser beam as well as any combination of these methods. The temperature used for this thermal post-treatment is higher than the temperature used for applying the first coating layer 2 and the second coating layer 3 so that these layers crystallize further which results in lower tensions in the respective layer as well as an improvement of the electrical and optical characteristics. This thermal post-treatment will take place, for example, after a glass window has been coated as described above and cut into a size fitting for the respective window. In a further embodiment, the coating layers 2 and 3 may be arranged on the substrate 1 directly during this post-treatment and not during the float process.

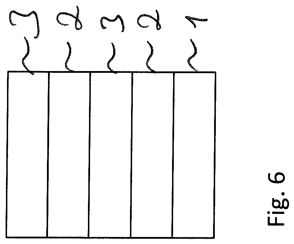

Figure 6 shows a side view of the multilayered system with several, alternating first coating layers 2 and second coating layers 3 in a view corresponding to Figure 1. Starting from the substrate 1, the first coating layer 1 is in direct contact with the substrate 1 and followed by the second coating layer 3, which is in direct contact with the first coating layer 2. In contrast to the multilayered system depicted in Figure 1, an additional first coating layer 1 is applied on top of the second coating layer 3 and in direct contact with the latter. Finally, an additional second coating layer 3 is arranged on top of the additional first coating layer 2. In further embodiments, the first coating layers 2 and the second coating layers 3 can be applied in alternating order starting with the second coating layer 3 on top of the substrate 1. In any case a periodic order of the layers 2 and 3 can be achieved. Furthermore, the multilayered system shown in Figure 6 can be applied on both sides of the substrate 1 facing away from each other. In this case, the order of the coating layers 2 and 3 may be but does not need to be identical on both sides. Of course, the intermediate layer 4 or the antireflective layer 5 can be added to the system shown in Figure 6 as well.

Features of the different embodiments which are merely disclosed in the exemplary embodiments can of course be combined with one another and also be claimed individually. In particular, the antireflective layer 5 can be applied to the systems shown in Figures 1 or 4 as well, i. e. to systems not showing the intermediate layer 4 or applying the antireflective layer 5 on top of the first coating layer 2.

## Claims

1. Multilayered system comprising
a substrate (1) being transparent for at least one wavelength in the range of visible wavelengths of electromagnetic radiation,
a first coating layer (2) for blocking radiation in the ultraviolet wavelength range of electromagnetic radiation and comprising at least zinc oxide and
a second coating layer (3) for blocking radiation in the infrared wavelength range of electromagnetic radiation and comprising at least one of a transparent conductive oxide being transparent in the range of visible wavelengths of electromagnetic radiation
an intermediate layer (4) comprising tin oxide
**characterized in that**
the first coating layer (2) is arranged directly on the substrate (1) and the intermediate layer (4) is arranged directly on the first coating layer (2) and
the second coating layer (3) is arranged directly on the intermediate layer (4) and
an antireflective layer (5) is arranged directly on top of the second coating layer (3).

2. Multilayered system according to claim 1, **characterized in that** the transparent conductive oxide comprises tin oxide with oxygen vacancies, antimony doping and/or mixed antimony/tin oxides, wherein an antimony concentration is preferably between 0.5 atomic percent and 15 atomic percent, more preferably between 1.5 atomic percent and 10 atomic percent.

3. Multilayered system according to claim 1, **characterized in that** the transparent conductive oxide comprises indium tin oxide, fluorine doped tin oxide, zinc tin oxide, indium gallium zinc oxide, aluminium zinc oxide or niobium or tantalum doped titanium oxide.

4. 4 Multilayered system according to any of the preceding claims, **characterized in that** the first coating layer (2) has a transmittance in the ultraviolet wavelength range of less than 20 percent, preferably of less than 1 percent.

5. Multilayered system according to any of the preceding claims, **characterized in that** the first coating layer (2) has a thickness of at least 50 nm, preferably of at least 250 nm, more preferably of at least 500 nm.

6. Multilayered system according to any of the preceding claims, **characterized in that** the second coating layer (3) has a thickness of between 50 nm and 1000 nm, preferably of between 250 nm and 500 nm.

7. Multilayered system according to any of the preceding claims, **characterized in that** the substrate (1) is made of glass and preferably free from any additional colour components.

8. Method for producing a Multilayered system, wherein a substrate (1) being transparent for at least one wavelength in the range of visible wavelengths of electromagnetic radiation is coated with
a first coating layer (2) for blocking radiation in the ultraviolet wavelength range of electromagnetic radiation and comprising at least zinc oxide
and a second coating layer (3) for blocking radiation in the infrared wavelength range of electromagnetic radiation comprising at least one of a transparent conductive oxide being transparent in the range of visible wavelengths of electromagnetic radiation
and an intermediate layer (4) comprising tin oxide
**characterized in that**
the substrate (1) is also coated with an antireflective layer (5), wherein
the first coating layer (2) is applied directly on the substrate (1) and the intermediate layer (4) is applied directly on the first coating layer (2) and
the second coating layer (3) is applied directly on the intermediate layer (4) and
the antireflective layer (5) is applied directly on the second coating layer (3).

9. Method according to claim 8,
**characterized in that** at least the first coating layer (2) or the second coating layer (3) are applied by chemical vapour deposition or chemical solution deposition and/or
that at least the first coating layer (2) or the second coating layer (3) are applied by aerosol assisted chemical vapour deposition, wherein the substrate (1) is heated up to 400 °C to 600 °C and is coated with a precursor comprising a chemical element or a chemical component of the respective layer.

10. Method according to any of claims 8 to 9, **characterized in that** at least the first coating layer (2) or the second coating layer (3) is applied by physical vapour deposition, preferably by sputtering.

11. Method according to any of claims 8 to 10 , **characterized in that** a thermal post-treatment of the substrate (1) as well as the first coating layer (2) and the second coating layer (3) is carried out for reducing tensions, wherein the thermal post treatment comprises heating in an oven, by flashlight, or by a laser beam.

## Patentansprüche

1. Mehrschichtsystem, umfassend:
ein Substrat (1), das für mindestens eine Wellenlänge in dem Bereich von sichtbaren Wellenlängen der elektromagnetischen Strahlung transparent ist,
eine erste Überzugsschicht (2) zum Abblocken von Strahlung im ultravioletten Wellenlängenbereich elektromagnetischer Strahlung und enthaltend zumindest Zinkoxid und
eine zweite Überzugsschicht (3) zum Abblocken von Strahlung im infraroten Wellenlängenbereich elektromagnetischer Strahlung, enthaltend zumindest eines einem transparenten leitfähigen Oxid, das im Bereich von sichtbaren Wellenlängen elektromagnetischer Strahlung transparent ist,
und einer Zwischenschicht (4), enthaltend Zinnoxid,
**dadurch gekennzeichnet, dass**
die erste Überzugsschicht (2) direkt auf dem Substrat (1) angeordnet ist und die Zwischenschicht (4) direkt auf der ersten Überzugsschicht (2) angeordnet ist, und
die zweite Überzugsschicht (3) direkt auf der Zwischenschicht (4) angeordnet ist, und
eine Antireflexionsschicht (5) direkt auf der zweiten Deckschicht (3) angeordnet ist.

2. Mehrschichtsystem nach Anspruch 1, **dadurch gekennzeichnet, dass** das transparente leitfähige Oxid Zinnoxid mit Sauerstoff-Leerstellen, Antimondotierung und/oder gemischte Antimon-/Zinnoxide enthält, wobei die Antimonkonzentration vorzugsweise zwischen 0,5 Atomprozent und 15 Atomprozent, noch weiter bevorzugt zwischen 1,5 Atomprozent und 10 Atomprozent liegt.

3. Mehrschichtsystem nach Anspruch 1, **dadurch gekennzeichnet, dass** das transparente leitfähige Oxid Indium-Zinn-Oxid, mit Fluor dotiertes Zinnoxid, Zink-Zinn-Oxid, Indium-Gallium-Zink-Oxid, Aluminium-Zink-Oxid oder mit Niob oder Tantal dotiertes Titanoxid enthält.

4. Mehrschichtsystem nach einem der vorangehenden Ansprüche, **dadurch gekennzeichnet, dass** die erste Überzugsschicht (2) einen Transmittanz im ultravioletten Wellenlängenbereich von weniger als 20 Prozent, vorzugsweise von weniger als 1 Prozent, aufweist.

5. Mehrschichtsystem nach einem der vorangehenden Ansprüche, **dadurch gekennzeichnet, dass** die erste Überzugsschicht (2) eine Dicke von mindestens 50 nm, vorzugsweise von mindestens 250 nm, noch weiter bevorzugt von mindestens 500 nm aufweist.

6. Mehrschichtsystem nach einem der vorangehenden Ansprüche, **dadurch gekennzeichnet, dass** die zweite Überzugsschicht (3) eine Dicke zwischen 50 nm und 1000 nm, vorzugsweise zwischen 250 nm und 500 nm aufweist.

7. Mehrschichtsystem nach einem der vorangehenden Ansprüche, **dadurch gekennzeichnet, dass** das Substrat (1) aus Glas gefertigt ist und vorzugsweise frei von jeglichen zusätzlichen Farbkomponenten ist.

8. Verfahren zum Herstellen eines Mehrschichtsystems, wobei ein Substrat (1), das für zumindest eine Wellenlänge im Bereich von sichtbaren Wellenlängen elektromagnetischer Strahlung transparent ist, überzogen ist mit
einer ersten Überzugsschicht (2) zum Abblocken von Strahlung im ultravioletten Wellenlängenbereich von elektromagnetischer Strahlung, und enthaltend zumindest Zinkoxid,
und einer zweiten Überzugsschicht (3) zum Abblocken von Strahlung im infraroten Wellenlängenbereich von elektromagnetischer Strahlung, enthaltend zumindest eines von einem transparenten leitfähigen Oxid, das im Bereich von sichtbaren Wellenlängen von elektromagnetischer Strahlung transparent ist,
und einer Zwischenschicht (4), enthaltend Zinnoxid,
**dadurch gekennzeichnet, dass**
das Substrat (1) außerdem mit einer Antireflexionsschicht (5) überzogen ist, wobei
die erste Überzugsschicht (2) direkt auf das Substrat (1) aufgebracht wird, und
die Zwischenschicht (4) direkt auf die erste Überzugsschicht (2) aufgebracht wird, und
die zweite Überzugsschicht (3) direkt auf die Zwischenschicht (4) aufgebracht wird und
die Antireflexionsschicht (5) direkt auf die zweite Beschichtungsschicht (3) aufgebracht wird.

9. Verfahren nach Anspruch 8, **dadurch gekennzeichnet, dass** zumindest die erste Überzugsschicht (2) oder die zweite Überzugsschicht (3) durch chemische Dampfphasenabscheidung oder durch chemische Lösungsabscheidung aufgebracht wird,
und/oder
dass zumindest die erste Überzugsschicht (2) oder die zweite Überzugsschicht (3) durch aerosolunterstützte chemische Dampfphasenabscheidung aufgebracht wird, wobei das Substrat (1) auf 400 °C bis 600 °C erhitzt wird, und mit einem Präkursor überzogen wird, der ein chemisches Element oder eine chemische Komponente der jeweiligen Schicht enthält.

10. Verfahren nach einem der Ansprüche 8 bis 9, **dadurch gekennzeichnet, dass** zumindest die erste Überzugsschicht (2) oder die zweite Überzugsschicht (3) durch physikalische Dampfphasenabscheidung, vorzugsweise durch Sputtern, aufgebracht wird.

11. Verfahren nach einem der Ansprüche 8 bis 10, **dadurch gekennzeichnet, dass** eine thermische Nachbehandlung des Substrats (1) sowie der ersten Überzugsschicht (2) und der zweiten Überzugsschicht (3) zum Abbau von Spannungen durchgeführt wird, wobei die thermische Nachbehandlung Erhitzung in einem Ofen, durch Blitzlicht oder durch einen Laserstrahl umfasst.

## Revendications

1. Système multicouche comprenant
un substrat (1) étant transparent pour au moins une longueur d'onde dans la gamme des longueurs d'onde visibles du rayonnement électromagnétique,
une première couche de revêtement (2) pour bloquer le rayonnement dans la gamme des longueurs d'onde ultraviolettes du rayonnement électromagnétique et comprenant au moins de l'oxyde de zinc et
une seconde couche de revêtement (3) pour bloquer le rayonnement dans la gamme des longueurs d'onde infrarouges du rayonnement électromagnétique et comprenant au moins un oxyde conducteur transparent qui est transparent dans la gamme de longueurs d'onde visibles du rayonnement électromagnétique
une couche intermédiaire (4) comprenant de l'oxyde d'étain
**caractérisé en ce que**
la première couche de revêtement (2) est disposée directement sur le substrat (1) et la couche intermédiaire (4) est disposée directement sur la première couche de revêtement (2) et
la seconde couche de revêtement (3) est disposée directement sur la couche intermédiaire (4) et
une couche antireflet (5) est disposée directement sur la seconde couche de revêtement (3).

2. Système multicouche selon la revendication 1, **caractérisé en ce que** l'oxyde conducteur transparent comprend de l'oxyde d'étain avec des lacunes d'oxygène, un dopage à l'antimoine et/ou des oxydes mixtes d'antimoine/étain, dans lequel une concentration d'antimoine est de préférence comprise entre 0,5 pour cent atomique et 15 pour cent atomique, plus préférablement entre 1,5 pour cent atomique et 10 pour cent atomique.

3. Système multicouche selon la revendication 1, **caractérisé en ce que** l'oxyde conducteur transparent comprend de l'oxyde d'étain et d'indium, de l'oxyde d'étain dopé au fluor, de l'oxyde d'étain et de zinc, de l'oxyde de zinc, de gallium et d'indium, de l'oxyde de zinc et d'aluminium ou de l'oxyde de titane dopé au niobium ou au tantale.

4. Système multicouche selon l'une quelconque des revendications précédentes, **caractérisé en ce que** la première couche de revêtement (2) présente une transmittance dans la gamme des longueurs d'onde ultraviolettes inférieure à 20 pour cent, de préférence inférieure à 1 pour cent.

5. Système multicouche selon l'une quelconque des revendications précédentes, **caractérisé en ce que** la première couche de revêtement (2) a une épaisseur d'au moins 50 nm, de préférence d'au moins 250 nm, plus préférablement d'au moins 500 nm.

6. Système multicouche selon l'une quelconque des revendications précédentes, **caractérisé en ce que** la seconde couche de revêtement (3) a une épaisseur comprise entre 50 nm et 1000 nm, de préférence entre 250 nm et 500 nm.

7. Système multicouche selon l'une quelconque des revendications précédentes, **caractérisé en ce que** le substrat (1) est en verre et de préférence exempt de tout composant coloré supplémentaire.

8. Procédé de production d'un système multicouche, dans lequel un substrat (1) transparent pour au moins une longueur d'onde dans la gamme des longueurs d'onde visibles du rayonnement électromagnétique est revêtu par
une première couche de revêtement (2) pour bloquer le rayonnement dans la gamme des longueurs d'onde ultraviolettes du rayonnement électromagnétique et comprenant au moins de l'oxyde de zinc
et une seconde couche de revêtement (3) pour bloquer le rayonnement dans la gamme des longueurs d'onde infrarouges du rayonnement électromagnétique comprenant au moins un oxyde conducteur transparent étant transparent dans la gamme des longueurs d'onde visibles du rayonnement électromagnétique
et une couche intermédiaire (4) comprenant de l'oxyde d'étain
**caractérisé en ce que**
le substrat (1) est également revêtu par une couche antireflet (5), dans lequel
la première couche de revêtement (2) est appliquée directement sur le substrat (1) et
la couche intermédiaire (4) est appliquée directement sur la première couche de revêtement (2) et
la seconde couche de revêtement (3) est appliquée directement sur la couche intermédiaire (4) et
la couche antireflet (5) est appliquée directement sur la seconde couche de revêtement (3).

9. Procédé selon la revendication 8, **caractérisé en ce qu'**au moins la première couche de revêtement (2) ou la seconde couche de revêtement (3) sont appliquées par dépôt chimique en phase vapeur ou dépôt chimique en solution
et/ou
**en ce qu'**au moins la première couche de revêtement (2) ou la seconde couche de revêtement (3) sont appliquées par dépôt chimique en phase vapeur assisté par aérosol, dans lequel le substrat (1) est chauffé jusqu'à 400 °C à 600 °C et est revêtu d'un précurseur comprenant un élément chimique ou un composant chimique de la couche respective.

10. Procédé selon l'une quelconque des revendications 8 et 9, **caractérisé en ce qu'**au moins la première couche de revêtement (2) ou la seconde couche de revêtement (3) est appliquée par dépôt physique en phase vapeur, de préférence par pulvérisation.

11. Procédé selon l'une quelconque des revendications 8 à 10, **caractérisé en ce qu'**un post-traitement thermique du substrat (1), ainsi que de la première couche de revêtement (2) et de la seconde couche de revêtement (3) est effectué pour réduire les tensions, dans lequel le post-traitement thermique comprend un chauffage dans un four, par une lampe de poche ou par un faisceau laser.
